(19) Europäisches Patentamt

European Patent Office

Office européen des brevets

(11) **EP 1 172 394 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(21) Anmeldenummer: **01115621.3**

(22) Anmeldetag: **03.07.2001**

(51) Int Cl.:
*C08G 63/685* (2006.01)      *C08F 283/02* (2006.01)
*C09D 151/08* (2006.01)      *C09D 167/00* (2006.01)
*C08L 33/04* (2006.01)      *C09D 133/04* (2006.01)
*C08G 18/46* (2006.01)

(54) **Aliphatische niedermolekulare Polyesterpolyole, deren Herstellung und Verwendung in hochwertigen Beschichtungsmitteln**

Aliphatic low molecular polyesterpolyols, their preparation and their use in high quality coatings

Polyesterpolyols de bas poids moléculaire, leur préparation et leur utilisation dans des produits de revêtement de haute qualité

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **11.07.2000 DE 10033512**

(43) Veröffentlichungstag der Anmeldung:
**16.01.2002 Patentblatt 2002/03**

(73) Patentinhaber: **Cytec Surface Specialties Austria GmbH**
**8402 Werndorf (AT)**

(72) Erfinder:
• **Epple, Ulrich, Dr.**
  **8042 Graz (AT)**
• **Kuttler, Ulrike, Dr.**
  **8302 Vasoldsberg (AT)**
• **Labenbacher, Adolf**
  **8042 Graz (AT)**

(74) Vertreter: **Deckers, Hellmuth Alexander**
**European Patent Attorney,**
**Bahnhofstrasse 26/A**
**55218 Ingelheim (DE)**

(56) Entgegenhaltungen:
GB-A- 1 046 910      US-A- 4 301 048
US-A- 4 436 849

**Beschreibung**

Die Erfindung betrifft niedermolekulare aliphatische Polyesterpolyole, ihre Herstellung und ihre Verwendung in Beschichtungsmitteln.

Heutige spritzfertige Klarlacke und pigmentierte Decklacke sowie Füllerlacke sind lösemittelärmer, d.h. sie enthalten weniger "flüchtige organische Bestandteile" ("volatile organic compounds, VOC"), die in die Atmosphäre bei deren Applikation und Trocknung abgegeben werden. Diese umweltfreundlicheren Beschichtungsmittel enthalten niedermolekulare Bindemittel und einen Härter. Im Falle eines Zweikomponenten-Beschichtungsmittels (2K) werden Härtungsmittel eingesetzt, die bereits bei niedriger Temperatur mit den funktionellen Gruppen des Bindemittels unter Ausbildung eines vernetzten Films reagieren (üblicherweise mehrfunktionelle Isocyanate), bei Einkomponenten-Beschichtungsmittel (1K) werden Härter eingesetzt, die erst bei erhöhter Temperatur reagieren (üblicherweise z. B. Melaminharze).

Häufig sind solche Bindemittel hydroxyfunktionelle Polyester oder Polyacrylate, auch acrylmodifizierte Polyester oder polyestermodifizierte Polyacrylate oder Mischungen dieser Harze untereinander oder mit Reaktiverdünnern versetzte derartige Harze.

Reaktiverdünner sind solche organische Chemikalien, die die Viskosität des Bindemittels in Mischung mit diesem herabsetzen, die aber mit dem jeweiligen Härter reagieren können. Bei der 2K-Härtung sind dies beispielsweise sterisch anspruchsvolle Aminverbindungen (z.B. Asparaginsäureester), verkappte Aminverbindungen (z.B. Ketimine, Aldimine) oder verkappte β-Hydroxyaminverbindungen (z.B. Oxazolidine). Nachteil all dieser Verbindungen sind deren gelbe bis braune Eigenfarbe, die hohe Vergilbungsneigung von diese Verbindungen enthaltenden Lacken nach Applikation, die kurze Topfzeit ("pot life": ca. 1,5 h, gefordert werden jedoch ca. 8 h, d.h. 1 Arbeitstag) und die nicht vorhandene Applikationssicherheit bei unterschiedlichen Witterungsbedingungen in der Praxis (z.B. Entkappung der Aminverbindungen durch die Einwirkung von Luftfeuchtigkeit). Die Topfzeit (Lackverarbeitungszeit) ist definiert als diejenige Zeit, innerhalb derer sich die Ausgangsviskosität des applikationsfertigen Lacks verdoppelt. Somit fallen solche Verbindungen als Zusatz für die oben genannten hochwertigen ("high performance"-) Lacksysteme aus.

Bekannt ist auch, daß die Trocknungsgeschwindigkeit von Lacken mit hohem Festkörper-Massenanteil ("high solids") durch externe Katalyse (z.B. mit Dibutylzinndilaurat, Zinkoctoat, Triäthylendiamin, Diäthyläthanolamin, flüchtigen Säuren usw.) beschleunigt werden kann, was aber auch zu einer starken Verkürzung der Topfzeit bzw. Lackverarbeitungszeit führt. Zudem wird durch Änderung der Polarität des Polymergerüstes bei Acrylatharzen (z.B. durch Einführen von Carboxylgruppen) versucht, die Reaktivität mit Isocyanat-Härtern durch Modifikation des Bindemittels zu verbessern (vgl. EP-A 0 680 977).

Bisher bekannte niedermolekulare Polyesterharze, die rasch antrocknen, enthalten spezielle, teure, sterisch gehinderte Bausteine und weisen eine Säurezahl von 5 bis 35 mg/g auf (DE-A 198 09 461) und zeigen dennoch längere Trocknungszeiten, bis zur Staubtrocknung oder zur Klebfreitrocknung, als die bekannten Systeme mit den üblichen höhermolekularen Bindemitteln. Zudem haben Lacke mit diesen niedermolekularen Polyestern nur eine kurze Topfzeit (ca. 3 h) und eine verbesserungswürdige Oberflächengüte ("levelling").

Wünschenswert sind daher preiswerte niedermolekulare Polyesterharze ohne diese speziellen Bausteine mit schnellerer Trocknung, langer Topfzeit und guter Oberfläche ohne Vergilbungsneigung nach Applikation.

Überraschenderweise wurde gefunden, daß durch Verwendung von elektronenreichen heterocyclischen funktionellen Bausteinen mit Hydroxy- und/oder Epoxid-Gruppen und die Verwendung von trifunktionellen Hydroxyverbindungen zusätzlich zu difunktionellen Hydroxyverbindungen neuartige niedermolekulare aliphatische OH-funktionelle Polyesterharze erstmals zugänglich sind, die bei Isocyanathärtung beschleunigt trocknen, aber dennoch ausreichend lange Topfzeit (6 bis 8 h) aufweisen und einen guten Verlauf ("levelling") des Lackfilmes und geringe Vergilbungsneigung nach Applikation zeigen.

Die für die Erfindung geeigneten elektronenreichen heterocyclischen OH-funktionellen und/oder epoxyfunktionellen Bausteine sind mindestens bifunktionelle Verbindungen, die mindestens eine cyclische Struktur besitzen und mindestens neben Kohlenstoff, Wasserstoff und Sauerstoff ein Heteroatom wie Stickstoff, Schwefel oder Phosphor enthalten. Dieses Heteroatom ist vorzugsweise in Nachbarschaft, insbesondere in alpha-Stellung zu, einer Carbonylfunktion. Besonders geeignet als Heteroatom ist Stickstoff. Beispiele solcher OH-funktionellen Monomerbausteine sind 4,5-Dihydroxy-N,N'-dimethyloläthylenharnstoff oder Trishydroxyäthylisocyanurat (1,3,5-Tris-(2-hydroxyäthyl)-1,3,5-triazin-2,4,6-(1H, 3H, 5H)-trion). Ein Beispiel für einen epoxyfunktionellen Baustein ist Triglycidylisocyanurat.

Gegenstand der Erfindung sind daher niedermolekulare Polyesterpolyole mit einer gewichtsmittleren molaren Masse $M_w$ von bis zu 3500 g/mol, mit Hydroxylzahlen von 80 bis 280 mg/g und Säurezahlen von 5 bis 40 mg/g, enthaltend die nachstehend genannten Stoffmengenanteile (in % = mol/100 mol) von Strukturbausteinen abgeleitet von

a) 1 bis 18 % aliphatischen mono- oder polycyclischen Verbindungen A, die elektronenreiche heterocyclische mindestens bifunktionelle Verbindungen sind mit mindestens einer cyclischen Struktur, die neben Kohlenstoff, Wasserstoff und Sauerstoff mindestens ein Heteroatom ausgewählt aus Stickstoff, Schwefel und Phosphor enthalten, und deren funktionelle Gruppen ausgewählt sind aus Hydroxylgruppen und Epoxidgruppen, wobei als Heteroatom ein Stickstoffatom bevorzugt wird, das bevorzugt in alpha-Position zu einer Carbonylgruppe steht,

b) 1 bis 30 %, bevorzugt 3 bis 25 %, besonders bevorzugt 5 bis 20 %, aliphatischen acyclischen oder cyclischen Polyhydroxyverbindungen **B** mit drei oder mehr Hydroxylgruppen pro Molekül,

c) 15 bis 50 %, bevorzugt 20 bis 45 %, besonders bevorzugt 25 bis 40 %, linearen oder verzweigten aliphatischen Dihydroxyverbindungen **C**,

d) 25 bis 60 %, bevorzugt 30 bis 55 %, besonders bevorzugt 35 bis 50 %, aliphatischen cyclischen Polycarbonsäuren **D**

und

e) 0 bis 20 %, bevorzugt 1 bis 15 %, besonders bevorzugt 2 bis 10 %, polyfunktionellen Verbindungen **E**, ausgewählt aus aliphatischen linearen und verzweigten Dicarbonsäuren, aromatischen Dicarbonsäuren und Polycarbonsäuren mit drei oder mehr Carboxylgruppen pro Molekül, sowie

f) 0 bis 15 %, bevorzugt 1 bis 12 %, besonders bevorzugt 2 bis 10 %, monofunktionellen Bausteinen **F**, ausgewählt aus Monocarbonsäuren, Monoalkoholen und Monoepoxiden,

wobei der Quotient der Summe der Stoffmengen an Hydroxyl- und Epoxid-Gruppen der Komponenten **A** und **B** und der Stoffmenge an Hydroxylgruppen der Komponente **C** mindestens 1 oder größer als 1 ist, und sich die unter a), b), c), d), e) und f) jeweils angegebenen Stoffmengenanteile zu 100 % ergänzen.

Die Säurezahl ist gemäß DIN EN ISO 3682 definiert als der Quotient derjenigen Masse $m_{KOH}$ an Kaliumhydroxid, die erforderlich ist, um eine zu untersuchende Probe zu neutralisieren, und der Masse $m_B$ dieser Probe (Masse des Feststoffes in der Probe bei Lösungen oder Dispersionen); ihre übliche Einheit ist "mg/g". Die Hydroxylzahl ist gemäß DIN EN ISO 4629 definiert als der Quotient derjenigen Masse $m_{KOH}$ an Kaliumhydroxid, die genausoviel Hydroxylgruppen aufweist wie eine zu untersuchende Probe, und der Masse $m_B$ dieser Probe (Masse des Feststoffes in der Probe bei Lösungen oder Dispersionen); ihre übliche Einheit ist "mg/g".

Die aliphatischen mono- oder polycyclischen Polyhydroxy- oder-epoxy-Verbindungen A haben bevorzugt 5- oder 6-gliedrige Ringe, in denen mindestens ein Atom von Kohlenstoff verschieden ist, und bevorzugt ein Stickstoffatom ist. Die dem Stickstoffatom in bevorzugter Weise benachbarte Carbonylgruppe ist ebenfalls bevorzugt Teil des Ringes. Besonders bevorzugt sind solche Verbindungen **A** mit zwei oder drei Stickstoffatomen in einem Ring. Die Hydroxylgruppen sind bevorzugt in Methylol-, Hydroxyäthyl- oder 2-Hydroxypropyl-Gruppen enthalten. Beispiel für geeignete Verbindungen sind N,N'-Dimethylol-2-imidazolidon, N,N'-Dimethylol-4,5-dihydroxy-2-imidazolidon, die Umsetzungsprodukte von Parabansäure oder 2-Imidazolidon (Äthylenharnstoff) mit Oxiran oder Methyloxiran mit jeweils zwei Hydroxylgruppen sowie die Umsetzungsprodukte von Glykoluril (Acetylenharnstoff) mit Formaldehyd, Oxiran oder Methyloxiran bis zu den entsprechenden Tetra-hydroxymethyl-, -hydroxyäthyl- oder -hydroxypropyl-Glykolurilen. Eine besonders bevorzugte Verbindung ist das oben genannte Trishydroxyäthylisocyanurat bzw. das durch Umsetzung mit Methyloxiran zugängliche Homologe Trishydroxypropylisocyanurat. Es ist auch möglich, gemischte Hydroxyalkylderivate durch Umsetzung von Mischungen von Oxiran und Methyloxiran mit Isocyanursäure herzustellen. Bei der Umsetzung von Epichlorhydrin mit Isocyanursäure entsteht das als Polyepoxyverbindung bevorzugte Triglycidylisocyanurat. Andere Epoxy-funktionelle Verbindungen **A** lassen sich in gleicher Weise durch Umsetzen von Epichlorhydrin mit den genannten cyclischen Harnstoffen herstellen, beispielsweise Diglycidyläthylenharnstoff, Diglycidylparabansäure oder Tetraglycidylacetylenharnstoff. Durch Umsetzung mit Mischungen von z. B. Oxiran oder Methyloxiran mit Epichlorhydrin lassen sich gemischtfunktionelle Verbindungen **A** herstellen.

Die aliphatischen acyclischen oder cyclischen Polyhydroxyverbindungen **B** mit drei oder mehr Hydroxylgruppen pro Molekül haben bevorzugt 3 bis 20, bevorzugt 3 bis 12 Kohlenstoffatome und können auch linear oder verzweigt sein. Beispiele geeigneter Verbindungen sind Glycerin, Trimethyloläthan, Trimethylolpropan, 1,2,6-Trihydroxyhexan, 1,2,3-Trihydroxyheptan, Erythrit, Pentaerythrit, Sorbit, Xylit und Mannit, sowie Ditrimethyloläthan, Ditrimethylolpropan, Diglycerin und Dipentaerythrit. Es ist auch möglich, Umsetzungsprodukte dieser Verbindungen mit Oxiran oder Methyloxiran einzusetzen.

Die linearen oder verzweigten aliphatischen Dihydroxyverbindungen C haben bevorzugt 2 bis 20 Kohlenstoffatome, insbesondere 2 bis 9 Kohlenstoffatome. Bevorzugt sind primäre und besonders bevorzugt diprimäre Hydroxyverbindungen. Beispiele für geeignete Verbindungen sind Glykol, 1,2- und 1,3-Propandiol, 1,4-Butandiol, 1,6-Hexandiol, Neopentylglykol, 2-Methylpropandiol-1,3,2-Methyl-2-butylpropandiol-1,3,2,2,4-Trimethyl-1,3-pentandiol, Pinakol, Bishydroxymethylheptan und 2,2,4- sowie 2,4,4- Trimethylhexandiol-1,6. Besonders bevorzugt ist der Einsatz von Mischungen linearer und verzweigter Dihydroxyverbindungen.

Die aliphatischen cyclischen Polycarbonsäuren **D** haben 6 bis 12 Kohlenstoffatome und sind bevorzugt ausgewählt aus den cyclischen Dicarbonsäuren 1,2- und 1,4-Cyclohexandicarbonsäure und den dicyclischen Dicarbonsäuren cis-5-Norbornen-endo-2,3-dicarbonsäure und Methyl-5-norbornen-2,3-dicarbonsäure sowie der cyclischen Tricarbonsäure 1,3,5-Cyclohexantricarbonsäure.

Als polyfunktionelle Verbindungen **E** können aliphatische lineare und verzweigte Dicarbonsäuren, aromatische Dicarbonsäuren und Polycarbonsäuren mit drei oder mehr Carboxylgruppen pro Molekül eingesetzt werden. Bevorzugt sind aliphatische Dicarbonsäuren mit 2 bis 40 Kohlenstoffatomen wie Oxalsäure, Malonsäure, Bernsteinsäure, Glutarsäure, Adipinsäure, Korksäure, Sebacinsäure, verzweigte aliphatische Dicarbonsäuren wie Dimethylbernsteinsäure, Butylmalonsäure, Diäthylmalonsäure, Dimethylglutarsäure und Methyladipinsäure, sowie die hydrierten Fettsäuredimerisate und Gemische dieser Verbindungen; aromatische Di- und Polycarbonsäuren wie Phthalsäure, Iso- und Terephthalsäure, 2,3-,1,4- und 2,6-Naphthalindicarbonsäure, 4,4'-Diphenyldicarbonsäure, 4,4'-Sulfonyldibenzoesäure, 4,4'-Diphenylätherdicarbonsäure, 4,4'-Benzophenondicarbonsäure sowie Trimellithsäure, Trimesinsäure, Pyromellithsäure und Benzophenontetracarbonsäure.

Als monofunktionelle Bausteinen **F** können aliphatische oder aromatische Monocarbonsäuren wie Essigsäure, Äthylhexansäure, Isononansäure oder Benzoesäure oder aliphatische Monoalkohole mit 4 bis 20 Kohlenstoffatomen wie Äthanol, n-Butanol, tert. Butanol, Amylalkohol, 2-Äthylhexanol, Isononylalkohol oder Isotridecylalkohol. eingesetzt werden. Auch können Monoepoxide wie die Glycidylester von verzweigten Monocarbonsäuren eingesetzt werden.

Statt der Säuren und Hydroxyverbindungen lassen sich zur Synthese der erfindungsgemäßen niedermolekularen Polyester-Polyole auch esterbildende Derivate dieser Verbindungen einsetzen, wie z.B. Ester der Säuren mit niederen aliphatischen Alkoholen (mit 1 bis 4 Kohlenstoffatomen, lineare oder verzweigte, primäre, sekundäre oder tertiäre Alkohole), bevorzugt Methylester, Säureanhydride oder Säurehalogenide, sowie Ester der Hydroxyverbindungen mit flüchtigen organischen Säuren wie z.B. Acetate oder Propionate.

Die erfindungesgemäßen niedermolekularen Polyester-Polyole werden auf die bekannte Weise durch Mischen der Edukte und gemeinsame Kondensation bei erhöhter Temperatur hergestellt. Die Kondensationsreaktion läßt sich in bekannter Weise dadurch beschleunigen, daß das bei der Reaktion gebildete Wasser (oder andere Kondensate bei der Verwendung von Derivaten der eingesetzten Säuren und Alkohole) durch Destillation unter vermindertem Druck entfernt wird. Die Polykondensation läßt sich auch in Lösungsmitteln durchführen, die mit Wasser ein Azeotrop bilden; durch Destillieren, Abtrennen des Wassers und Rückführen des Lösungsmittels läßt sich die Polykondensation besonders effizient ausführen. Die Polykondensation kann auch in Gegenwart von Katalysatoren durchgeführt werden.

Für die vorliegende Erfindung ist es bevorzugt, durch Zusatz von reduzierenden Agenzien bei der Kondensation Verfärbungen des erzeugten Polyesterpolyols zu vermeiden. Dazu lassen sich beispielsweise Phosphite oder Verbindungen der unterphosphorigen Säure einsetzen, auch Wasserstoffperoxid kann zugesetzt werden.

Die erfindungsgemäßen niedermolekularenPolyester-Polyole können diskontinuierlich (sog. "batch"-Verfahren) oder kontinuierlich hergestellt werden. Es sind auch mehrstufige Verfahren bei Atmosphärendruck und mit erhöhtem Druck möglich.

Die erfindungsgemäßen extrem niedermolekularen OH- und COOH-funktionellen Polyester-Polyole können mit frei wählbaren Lösungsmitteln bzw. Lösungsmittelgemischen zu einem wählbaren Anteil angelöst werden.

Die erfindungsgemäß hergestellten, Hydroxyl- und Carboxylgruppen enthaltenden niedermolekularen Polyester-Polyole können noch chemisch oder physikalisch modifiziert werden, z. B. durch Umsetzung mit Isocyanat-Verbindungen oder Oxirangruppen enthaltenden Verbindungen. Die Umsetzung mit Isocyanat-Verbindungen führt am erfindungsgemäßen niedermolekularen Polyester-Polyol zu Urethangruppen. Die Umsetzung mit den Oxiran-Verbindungen führt zu zusätzlichen sekundären OH-Gruppen.

Auch können niedermolekulare Harnstoffderivate, die in der Lackindustrie zu sogenannten "sag controlled"-Harzen führen, mit hergestellt werden. Hierzu wird z. B. das niedermolekulare Polyester-Polyol in Mischung mit Mono- oder Polyaminen vorgelegt, und geeignete ein- oder mehrfunktionelle Isocyanate zugegeben. Dabei wird vorteilhaft so verfahren, daß bei Verwendung von Monoaminen mehrfunktionelle Isocyanate, und bei Verwendung von Polyaminen monofunktionelle oder teilverkappte mehrfunktionelle Isocyanate verwendet werden. Geeignete Amine sind primäre aliphatische lineare oder verzweigte oder cyclische Amine mit 2 bis 18 Kohlenstoffatomen Butylamin, Hexylamin, 2-Äthylhexylamin, Dodecylamin und Stearylamin, aliphatische, alicyclische und aromatische Diamine wie Äthylendiamin, 1,4-Diaminobutan und 1,6-Diaminohexan;1,3-Bis-aminomethyl-cyclohexan und 2,2-Bis-(4-aminocyclohexyl)propan sowie meta-Xylylendiamin. Geeignete Isocyanate sind die aus der Lackchemie bekannten mehrfunktionellen Isocyanate wie Trimethylendiisocyanat, Tetramethylendiisocyanat, Pentamethylendiisocyanat, Hexamethylendiisocyanat (HDI), 1,2-Propylendiisocyanat, Äthyläthylendiisocyanat, 2,3-Dimethyläthylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat (TDI), 2,6-Toluylendiisocyanat (TDI), 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan (IPDI), Bis-(4-isocyanatocyclohexyl)methan (HMDI), 4,4'-Diisocyanatodiphenyläther, 2,3-Bis-(8-isocyanatooctyl)-4-octyl-5-hexylcyclohexen, die isomeren Trimethylhexamethylendiisocyanate, Tetramethylxylylendiisocyanat (TMXDI). Gemische solcher Di-oder Polyisocyanate können ebenfalls eingesetzt werden. Als monofunktionelle Isocyanate kommen aliphatische, cycloaliphatische und aromatische Isocyanate mit bis zu 25 Kohlenstoffatomen in Frage. Beispiele sind Methylisocyanat, Äthylisocyanat, Propylisocyanat, Butylisocyanat, Stearylisocyanat, Phenylisocyanat, Naphthylisocyanat, Tolylisocyanat, Cyclohexylisocyanat, tert.-Butylisocyanat und 2-Äthylhexylisocyanat. Geeignete teilverkappte Isocyanate sind beispielsweise mehrfunktionelle Isocyanate (z. B. die di- oder polyfunktionellen oben genannten), die mit beispielsweise Monoalkoholen umgesetzt sind. Der Vorteil solcher "sag-controlled"-Harze ist, daß auch höhere Schichtstärken in einem Applikationsvorgang hergestellt werden können, ohne daß es dabei zu der sogenannten Läufer- oder Laufnasen-Bildung durch Abfließen des Lackes von gegen die Horizontale geneigten Oberflächen kommt. Insbesondere bei der Applikation von Dickschichtlacken wie Füllern, pigmentierten Decklacken und speziellen Klarlacken können diese Probleme durch Verwendung derart modifizierter oder formulierter Bindemittel vermieden werden. Bindemittel, die die erfindungsgemäßen niedermolekularen Polyesterpolyole mit dieser "sag-controlled"-Modifizierung enthalten, weisen neben dieser höheren Ablaufgrenze auch gute Transparenz auf und erlauben die Formulierung von Lacken mit hohem Festkörperanteil. In Klarlacken kann so ein Festkörper-Massenanteil (gemessen an Lacken, die im DIN - 4 - Becher bei 23 °C eine Auslaufzeit von 21 Sekunden aufweisen) von 60 % erreicht werden, bei einer Ablaufgrenze von 60 $\mu$m, und die erhaltenen Beschichtungen weisen hervorragende Optik und guten Glanz auf.

Auch können die erfindungsgemäßen niedermolekularen Polyester-Polyole zumindest teilweise mit Phosphorsäure verestert (modifiziert) sein.

Die Polyester-Polyole können in bevorzugter Weise auch mit insbesondere niedermolekularen Acrylat-Copolymerisaten gemischt werden. Eine andere Möglichkeit der Modifikation ist, daß die neuen niedermolekularen Polyester-Polyole auch Grundlage von (aufgepfropften) Acrylatpolymerisaten sein, wie in der EP-A 0 776 920 bzw. in EP-A 0 896 991 beschrieben. In beiden Fällen kann entweder der Esterharz- (Massenanteil der Acrylatkomponente kleiner als 50 %) oder der Acrylatharz-Charakter (Massenanteil der Acrylatkomponente größer als 50 %) überwiegen. Selbstverständlich ist auch eine Zusammensetzung mit gleichen Anteilen Ester-und Acrylatharz möglich.

Die Erfindung betrifft daher auch Gemische enthaltend die niedermolekularen Polyester-Polyole und ein separat oder in Gegenwart dieses Polyester-Polyols durch radikalische Polymerisation hergestelltes Copolymerisat, wobei das dem Copolymerisat zugrundeliegende Monomerengemisch

- mindestens ein olefinisch ungesättigtes Monomeres **G** enthält, das ein Alkyl-Ester einer aliphatischen linearen, verzweigten oder cyclischen $\alpha,\beta$-ungesättigten Monocarbonsäure oder ein Alkyl-Diester einer olefinisch ungesättigten aliphatischen linearen, verzweigten oder cyclischen Dicarbonsäure mit 1 bis 20, bevorzugt 2 bis 12 Kohlenstoffatomen im linearen, verzweigten oder cyclischen Alkylrest und 3 bis 10, bevorzugt 4 bis 7 Kohlenstoffatomen im Säurerest des Esters ist,
- weiterhin mindestens einen Hydroxyalkylester **H** einer der unter **G** genannten Mono-oder Dicarbonsäuren, wobei der Hydroxyalkylrest abgeleitet ist von einem mindestens zweiwertigen aliphatischen linearen, verzweigten oder cyclischen Alkohol mit 2 bis 15, bevorzugt 3 bis 8 Kohlenstoffatomen,
- mindestens einer Carbonsäure **I** ausgewählt aus den unter **G** genannten Monocarbonsäuren und Dicarbonsäuren in unveresterter bzw. bei den Dicarbonsäuren in mit einem der unter **G** genannten Alkylreste oder der einem unter **H** genannten Hydroxyalkylreste halbveresterter Form, sowie gegebenenfalls
- mindestens einem weiteren olefinisch ungesättigten Monomeren **J** ausgewählt aus Vinylaromaten wie Styrol, $\alpha$-Methylstyrol, Vinyltoluol, Chlorstyrol, Vinylestern von aliphatischen linearen, verzweigten oder cyclischen Monocarbonsäuren mit 2 bis 20, bevorzugt 3 bis 12 Kohlenstoffatomen, Vinylhalogeniden wie Vinylchlorid, Vinylidenchlorid, ungesättigten Nitrilen wie Acryl- und Methacrylnitril, Amiden bzw. Diamiden der unter **I** genannten Säuren, Vinyl- und Allyläthern von aliphatischen linearen, verzweigten oder cyclischen Alkoholen mit 1 bis 18 Kohlenstoffatomen, Estern von Glycidyl- oder Methylglycidylalkohol mit olefinisch ungesättigten Carbonsäuren und olefinisch ungesättigten Ketonen mit 4 bis 21 Kohlenstoffatomen.

Diese Gemische können in der Weise hergestellt werden, daß das Copolymerisat dem Polyester-Polyol zugemischt wird, wobei das Massenverhältnis der Festkörper-Anteile des Polyester-Polyols und des Copolymerisats von 1: 9 bis 9:1, bevorzugt von 7:3 bis 3:7, beträgt. Die Mischung der beiden Komponenten erfolgt üblicherweise durch inniges Vermischen der Lösungen beider Komponenten. Man spricht in diesem Fall von Mischungen oder "Blends".

Die Gemische können gemäß der Erfindung auch bevorzugt so hergestellt werden, daß die dem Copolymerisat zugrundeliegende Monomerenmischung in Gegenwart des Polyester-Polyols polymerisiert wird, wobei das Verhältnis der Masse des Festkörper-Anteils des Polyester-Polyols und der Masse der dem Copolymerisat zugrundeliegenden Monomerenmischung 9:1 bis 1:9, bevorzugt 7:3 bis 3:7, beträgt. Man spricht in diesem Fall von einem "Schoßpolymerisat".

Ein Vorteil bei der Verwendung derartiger Mischungen bzw. Schoßpolymerisate zur Formulierung von Lacken ergibt sich dadurch, daß bei vergleichbaren Anwendungseigenschaften (Härte, Trocknungsgeschwindigkeit) der Festkörper-Massenanteil (bei vorgegebener Auslaufzeit) und die Hydroxylzahl gezielt eingestellt werden können, wobei bei geringerer Hydroxylzahl die Menge des für das vorgegebene Eigenschaftsniveau erforderliche Härtungsmittel angepaßt werden kann und damit die Vernetzungsdichte bei vorgegebener Härte des Lackfilms variiert werden kann.

Die Monomerenmischung enthält in beiden Fällen bevorzugt Massenanteile von

g) 25 bis 80 % Alkyl(meth)acrylaten **G**, deren Alkylreste linear, verzweigt oder cyclisch sein können und 1 bis 15 C-Atome aufweisen,

h) 1 bis 35 % Hydroxyalkyl(meth)acrylaten **H**, deren Hydroxyalkylreste linear, verzweigt oder cyclisch sein können und 2 bis 20 Atome aufweisen,

i) 0,5 bis 20 % α,β-ungesättigten Carbonsäuren **I**, und

j) 0 bis 55 % von Verbindungen **J** ausgewählt aus aromatischen Vinylverbindungen, aliphatischen Vinylestern und Vinyläthern, Allyläthern, Vinylhalogeniden, olefinisch ungesättigten Ketonen, Estern von Glycidyl- oder Methylglycidylalkohol mit olefinisch ungesättigten Carbonsäuren und Nitrilen von α,β-ungesättigten Carbonsäuren,

wobei die Summe der Massenanteile für die Komponenten **G** bis **J** 100 % ergeben muß und die Komponenten **G** bis **J** vorzugsweise so ausgewählt werden, daß durch Polymerisation dieser Mischung ohne weitere Zusätze theoretisch ein Acrylatcopolymerisat mit einer Säurezahl von mindestens 5 mg/g und einer Hydroxylzahl von 30 bis 190 mg/g resultieren würde. Die Polymerisation erfolgt in Gegenwart von bekannten radikalbildenden Polymerisationsinitiatoren sowie gegebenenfalls eines Reglers.

Die Komponente **G** ist bevorzugt ausgewählt aus Estern der Acryl- und Methacrylsäure mit Methanol, Äthanol, n- und iso-Propanol, n-, sek.-, iso- und tert.-Butanol sowie Isobornyl- und Isofenchylalkohol.

Die Komponente **H** ist bevorzugt ausgewählt aus Estern der Acryl- und Methacrylsäure mit Glykol, 1,2- und 1,3-Propandiol und 1,4-Butandiol.

Die Komponente **I** ist bevorzugt ausgewählt aus Acryl- und Methacrylsäure.

Die Komponente **J** ist bevorzugt ausgewählt aus Styrol, den isomeren Vinyltoluolen und α-Methylstyrol.

Im Rahmen der Erfindung ist es eine weitere bevorzugte Verfahrensweise, die Polymerisation der Komponenten **G** bis **J** in Gegenwart einer cyclischen Verbindung **K** durchzuführen, wobei diese Verbindung **K** mit den als Komponente **I** und/oder mit den als Komponente **H** eingesetzten Verbindungen unter Bildung einer copolymerisationsfähigen Verbindung reagieren kann. Geeignete Verbindungen **K** sind Epoxide, insbesondere Glycidylester von in alpha-Stellung verzweigten aliphatischen Monocarbonsäuren mit 4 bis 12 Kohlenstoffatomen in der Säuregruppe, die mit den Säuren **I** unter Bildung eines ungesättigten Hydroxyesters reagieren, Lactone oder Lactame, die mit den Säuren **I** unter Bildung einer ungesättigten Säure oder mit den Hydroxylgruppen-haltigen Verbindungen **H** unter Bildung von ungesättigten Hydroxyverbindungen oder Aminen reagieren. Derartige Verfahrensweisen sind in der EP-A 0 027 931, in der WO 90/03991 sowie den EP-A 0 635 523, 0 638 591, 0 680 977, 0 714 915 und 0 741 149 beschrieben, deren Offenbarung bezüglich dieser Verfahren durch die Bezugnahme hier eingeschlossen wird.

Die erfindungsgemäßen niedermolekularen Polyester-Polyole - allein und in Mischung - eignen sich besonders gut für lacktechnische Anwendungen in Ein- bzw. Zwei-Komponenten-Systemen, insbesondere für sogenannte "high-solid"-Systeme, also für lösungsmittelhaltige Mischungen mit hohem Festkörper-Massenanteil.

Geeignete Lösungsmittel für die erfindungsgemäßen Oligoesterpolyole bzw. die diese enthaltenden Mischungen sind z.B. aliphatische, cycloaliphatische und aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat und Propylenglykolmethylätheracetat; Äther, wie Äthylenglykolmonoäthyl-, -methyl-oder -butyl-äther; Glykole; Alkohole; Ketone wie Methylisoamylketon, Methylisobutylketon; Lactone und Gemische derartiger Lösungsmittel. Als Lösungsmittel sind auch Umsetzungsprodukte von Lactonen mit Glykolen oder Alkoholen einsetzbar.

Gegenstand der vorliegenden Erfindung sind weiterhin Beschichtungsmittel, die die erfindungsgemäßen niedermolekularen Polyester-Polyole oder deren "sag-controlled"-Modifikationen, gegebenenfalls in Abmischung mit anderen organischen Polyhydroxyverbindungen oder mit Reaktivverdünnern (niedermolekularen Verbindungen, die allein oder auch gemeinsam mit den niedermolekularen Polyester-Polyolen oder anderen Mischungskomponenten mit den verwendeten Härtern reagieren) enthalten. Insbesondere sind AcrylatCopolymerisate der oben beschriebenen Art als Mischungskomponente geeignet. Diese festkörperreichen Beschichtungsmittel werden insbesondere angewendet in der Lackierung von Metallblechen (vor allem bei der Automobilserien- und -reparaturlackierung, sowie für allgemeine Industrie-Anwendungen, wie z. B. Stahlbrücken), der Kunststoff- und Holzlackierung sowie im Bereich der Beschichtung von Textilien, Leder, Papier und Baustoffen.

Die niedermolekularen Polyester-Polyole oder deren "sag-controlled"-Modifikationen und diese niedermolekularen Polyester-Polyole enthaltende Mischungen können in Gegenwart von geeigneten Vernetzern (Härtern) kalt oder bei erhöhter Temperatur gehärtet werden.

Als Härterkomponente eignen sich in diesen Beschichtungsmitteln Aminoplastharze, Polyisocyanate oder Anhydridgruppen enthaltende Verbindungen einzeln oder in Kombination. Der Vernetzer wird jeweils in solch einer Menge zugesetzt, daß das Verhältnis der Anzahl der OH-Gruppen des niedermolekularen Polyester-Polyols (bzw der diese enthaltenden Mischungen) zur Anzahl der reaktiven Gruppen des Vernetzers zwischen 0,3 : 1 und 3 : 1 liegt.

Als Härterkomponente geeignete Aminoplastharze sind bevorzugt Harnstoff-, Melamin-und/oder Benzoguanaminharze. Es handelt sich hierbei um vorzugsweise verätherte Harnstoff-, Melamin- bzw. Benzoguanamin-Formaldehyd-Kondensationsprodukte. Geeignete Mischungen liegen im Bereich von 50 : 50 bis 90 : 10 für die Verhältnisse der Massen der niedermolekularen Polyester-Polyole und der Vernetzer, jeweils auf die Masse des Festharzes bezogen.

Geeignete Phenolharze und ihre Derivate können auch als Härter eingesetzt werden. Diese Vernetzer führen in Gegenwart von Säuren, z.B. p-Toluolsulfonsäure zur Aushärtung der Beschichtung. Die Heißhärtung kann in üblicher Weise bei Temperaturen von 85 bis 200 °C, z.B. in 10 bis 30 Minuten vorgenommen werden.

Für die Härtung der erfindungsgemäßen Produkte unter Vernetzung eignen sich Polyisocyanate, besonders bei moderaten Temperaturen bzw. bei Raumtemperatur. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie Hexamethylendiisocyanat, 2,2,4-und2,4,4-Trimethyl-1,6-hexamethylendiisocyanat,Dodekamethylendiisocyanat, Tetramethyl-p-xylylendiisocyanat, 1,4-Diisocyanatocyclohexan, 1-Isocyanato-3,3,5-trimethyl-5-isocyanatomethyl-cyclohexan (IPDI), 2,4'- und 4,4'-Diisocyanatodicyclohexylmethan, 2,4'- und 4,4'-Diisocyanato-diphenylmethan sowie Gemische dieser Isomeren mit ihren höheren Homologen, wie sie in an sich bekannter Weise durch Phosgenierung von Anilin/Formaldehyd-Kondensaten zugänglich sind, 2,4- und 2,6-Diisocyanatotoluol und beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie sie z.B. in der EP-A 0 470 461 beschrieben werden.

Zu den besonders bevorzugten modifizierten Polyisocyanaten gehören das N,N',N''-Tris-(6-isocyanatohexyl)-biuret und seine Gemische mit seinen höheren Homologen, sowie das N,N',N''-Tris-(6-isocyanatohexyl)-isocyanurat bzw. dessen Gemische mit seinen höheren, mehr als einen Isocyanuratring aufweisenden Homologen.

Für eine Härtung bei erhöhter Temperatur kommen zusätzlich verkappte Polyisocyanate, sowie Polycarbonsäuren und deren Anhydride in Frage.

Die erfindungsgemäßen niedermolekularen Polyester-Polyole und die diese enthaltenden Mischungen eignen sich besonders gut zur Herstellung von festkörperreichen, lösungsmittelhaltigen Klar- und Decklacken sowie für Füller.

In Beschichtungsmitteln, die mit den erfindungsgemäßen niedermolekularen Polyester-Polyolen bzw. den diese enthaltenden Mischungen hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufsmittel, Silikonöle, Zusatzstoffe wie Celluloseester, besonders Celluloseacetobutyrat, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate etc., viskositätsbeeinflussende Zusätze, Mattierungsmittel, UV-Absorber und Lichtschutzmittel, Antioxidantien und/oder Peroxidzersetzer, Entschäumer und/oder Netzmittel, aktive Verdünner und dergleichen.

Die Beschichtungsmittel können nach bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Sie können in der Wärme appliziert werden, gegebenenfalls können sie durch Eindrücken von superkritischen Lösungsmitteln (z.B. $CO_2$) in eine applikationsfertige Form gebracht werden. Auto-, Industrie-, Kunststoff-, Holz-, Baustoff- und Textillacke mit ausgezeichneten Eigenschaften lassen sich mit Bindemitteln oder Bindemittel-Mischungen erhalten, die mit den erfindungsgemäßen niedermolekularen Polyester-Polyolen hergestellt werden. Diese Bindemittel können sowohl zur Herstellung von Zwischenschichten als auch von pigmentierten oder unpigmentierten Decklacken eingesetzt werden.

Hierzu werden die Lacke im allgemeinen innerhalb des Temperaturbereichs von -20 bis +100 °C, vorzugsweise von -10 bis + 80 °C ausgehärtet.

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. "Teile" (abgekürzt "Tle.") sind stets Massenanteile. Konzentrationsangaben in "%" sind Massenanteile des gelösten Stoffes in der Lösung (Masse des gelösten Stoffes, dividiert durch die Masse der Lösung).

**Beispiele**

**1a) Synthese der Polyester**

Es wurden Polyester gemäß der Zusammensetzung in der Tabelle 1 (eingesetzte Stoffmengen der Edukte in mol) hergestellt. Dazu wurden die Ausgangskomponenten unter Stickstoff auf 190 bis 200 °C erhitzt und das gebildete Reaktionswasser laufend entfernt. Die Temperatur wurde kontinuierlich auf 220 °C erhöht, bis die Säurezahl zwischen 20 und 30 mg/g war. Danach wurde das niedermolekulare Polyester-Polyol zu einer ca. 80 %igen Lösung mit Butylacetat ("80 BAC") angelöst.

Tabelle 1

| Ausgangskomponenten | Bsp.1 | Bsp.2 | Bsp.3 | Bsp.4 |
|---|---|---|---|---|
| | mol/(100 mol) | mol/(100 mol) | mol/(100 mol) | mol/(100 mol) |
| THEIC | 8,9 | 8,9 | 9,4 | 8,5 |
| TMP | 13,7 | 13,7 | 14,4 | 13,5 |
| EG | 13,4 | - | 11,6 | 12,7 |
| PG | - | 13,4 | - | - |
| NPG | 19,5 | 19,5 | 18 | 19 |
| HHPSA | 44,5 | 44,5 | 46,6 | 46,3 |

Dabei bedeuten die Abkürzungen

THEIC   Trishydroxyäthylisocyanurat (1,3,5-Tris-(2-hydroxyäthyl)-1,3,5-triazin-2,4,6-(1H,3H,5H)-trion)
TMP   Trimethylolpropan
EG   Äthylenglykol
PG   1,2-Propylenglykol
NPG   Neopentylglykol
HHPSA   Hexahydrophthalsäureanhydrid (1,2-Cyclohexandicarbonsäureanhydrid)

An den Polyestern der Beispiele 1 bis 4 wurden die folgenden Werte bestimmt:

Tabelle 2 Eigenschaften der Polyester

| Polyesterpolyol aus | | Bsp. 1 | Bsp. 2 | Bsp. 3 | Bsp. 4 |
|---|---|---|---|---|---|
| Festkörper-Massenanteil | in % | 78,5 | 81,0 | 79,5 | 79,0 |
| Säurezahl | in mg/g | 25,3 | 28,0 | 24,6 | 24,0 |
| Hydroxylzahl | in mg/g | 165 | 165 | 151 | 141 |
| Viskosität in Lieferform | in mPa·s | 18230 | 22586 | 41946 | 29380 |
| Viskosität in 50 %iger Lösung in BAC | in mPa·s | 30 | 28 | 31 | 32 |
| gewichtsmittlere molare Masse $M_w$ | in g/mol | 1872 | 2191 | 3127 | 2670 |
| zahlenmittlere molare Masse $M_n$ | in g/mol | 847 | 939 | 1101 | 1113 |
| Uneinheitlichkeit $U = M_w/M_n$ | | 2,2 | 2,3 | 2,8 | 2,4 |

Dabei wurde der Festkörper-Massenanteil nach DIN EN ISO 3251, die Säurezahl nach DIN EN ISO 3682, die Hydroxylzahl nach DIN EN ISO 4629, und die Viskosität nach DIN EN ISO 3219 bestimmt; die Vorschriften dieser (neueren) Normen entsprechen den der weiter oben genannten. Die Messung der molaren Massen erfolgte durch Gelpermeationschromatographie, die Eichung wurde mit Polystyrolstandards in der üblichen Weise vorgenommen.

**1b) Herstellung eines Acrylat-Mischpolymerisats**

1b1) Vorprodukt: Oligo-Polyesterpolyol

Das gemäß Beispiel 1 hergestellte Polyesterpolyol wurde umgelöst von Butylacetat in ein Aromatengemisch (Solvent Naphtha, mit Siedebereich zwischen 150 und 180 °C, hier ® Shellsol A der Fa. Shell Chemicals, im folgenden als "SNA" bezeichnet), und auf einen Festkörper-Massenanteil von 78 % eingestellt, bestimmt gemäß DIN EN ISO 3251).

1b2) Acrylat-Mischpolymerisat

In einen mit Rührer, Heizung, Kühlsystem und Inertgas-Einleitung sowie Zugabeeinrichtungen ausgerüsteten Reaktor wurden 135 g der oben beschriebenen Lösung des Oligo-Polyesterpolyols aus 1b1) und weitere 237,4 g SNA vorgelegt, die Mischung wurde mit Stickstoff überlagert und auf die Siedetemperatur des Gemischs von 168 °C aufgeheizt. Danach wurden 282 g n-Butylacrylat, 59,4 g Methylmethacrylat, 227,5 g Hydroxyäthylmethacrylat , 14,8 g Acrylsäure, 428 g Styrol und 7,9 g tert.-Dodecylmercaptan über einen Tropftrichter innerhalb von 6 Stunden dosiert. Gleichzeitig wurden durch eine separate Zugabe-Einrichtung 19,8 g Di-tert.-Amylperoxid gelöst in 99 g ® Solvent Naphtha 150/180 ("SNA", aromatisches Kohlenwasserstoffgemisch mit einem Siedetemperaturbereich bei Normaldruck von 150 bis 180 °C) zudosiert. Nach dem Ablauf von 6 Stunden wurde mit 2 g Di-tert.-Amylperoxid in 10 g SNA gelöst nachinitiiert und weitere 2 Stunden nachreagiert. Danach wurde das Produkt durch Zugabe von 100 g Butylacetat auf einen Festkörper-Massenanteil von 69,9 % (bestimmt nach DIN EN ISO 3251) eingestellt.

Das erhaltene Acrylat-Mischpolymerisat 1b2) war hochtransparent und hatte die folgenden Kenngrößen: Säurezahl 11,2 mg/g; Hydroxylzahl 95,4 mg/g, dynamische Viskosität (gemessen nach DIN EN ISO 3219 bei 23 °C, Lieferform, d. i. die oben genannte Verdünnung) 5235 mPa·s, dynamische Viskosität (gemessen nach DIN EN ISO 3219 bei 23 °C an einer Lösung, die mit zusätzlichem Butylacetat auf einen Festkörper-Massenanteil von 50 % verdünnt wurde) 79 mPa·s. Die gewichtsmittlere molare Masse $M_w$ betrug 6805 g/mol, die Uneinheitlichkeit $U = M_w / M_n$ war 3,0 (Eichung mit Polystyrol-Standards).

1c) Mischung eines Oligo-Polyester-Polyols und eines niedermolekularen Acrylatcopolymerisats

Das Polyesterpolyol gemäß 1b1) wurde mit einem niedermolekularen Acrylatcopolymerisat gemäß dem Beispiel 3 der EP-A 0 680 977 in einem Verhältnis vermischt, daß der Quotient der Massen des Polyesterpolyols und des Acrylatcopolymerisats 1:4 betrug.

## 2) Herstellung von "ultra high solids" Klarlacken

Mit den in Tabelle 3 angegebenen Einwaagen der genannten Komponenten wurden Klarlacke hergestellt und anschließend sämtlich auf eine Verarbeitungsviskosität entsprechend einer Auslaufzeit von 21 s eingestellt (gemessen nach DIN 53211, bei 23 °C)

Tabelle 3

| Bindemittel | | 1 | 2 | 3 | 4 | 5 (Vergleich EP-A 0 940 415, Bsp. 3) |
|---|---|---|---|---|---|---|
| Festkörper-Massenanteil | in % | 78,5 | 81 | 79,5 | 79 | 78 |
| Hydroxylzahl | in mg/g | 165 | 165 | 151 | 141 | 221 |
| Bindemitteleinwaage | in g | 95,5 | 61,75 | 62,9 | 94,9 | 80 |
| Lösungsmittelgemischeinwaage * | in g | 26,3 | 12,5 | 17,5 | 26,3 | 15,6 |
| ®Additol XL 480 | in g | 0,24 | 0,16 | 0,16 | 0,24 | 0,2 |
| ®Desmodur N 3300 | in g | 42,2 | 28,75 | 26,4 | 37 | 47,3 |
| Gemisch MAK/BGAC (60 g/40 g) | in g | 36,7 | 30,1 | 27,6 | 42,7 | 31,5 |
| Auslaufzeit | in s | 21 | 21 | 21 | 21 | 21 |
| Lackbezeichnung | | 1 | 2 | 3 | 4 | 5 |

Lösungsmittelgemisch :
Gemisch aus Methylamylketon ("MAK")/Butylglykolacetat ("BGAC")/Methoxypropylacetat ("MPAC") im Massenverhältnis 60:15:25
®Additol XL 480: Verlaufsmittel (Solutia Germany GmbH & Co. KG, Wiesbaden) ®Desmodur N 3300: Polyisocyanat (BAYER AG, Leverkusen)
Mit dem Bindemittel aus Beispiel 1b2) wurde gemäß der obigen Rezeptur ebenfalls ein Klarlack hergestellt, der bei einer Auslaufzeit von 21 Sekunden einen Festkörper-Massenanteil von ca. 52 % aufwies. Ein Klarlack mit einem Bindemittel gemäß 1c) wies einen Festkörper-Massenanteil von ca. 50 % bei derselben Auslaufzeit auf.

## 3) Lacktechnische Prüfung der "ultra high solids" Klarlacke

Die unter 2) gefertigten Lacksysteme wurden mittels 200 $\mu$m Rakel auf gereinigte Glasplatten appliziert und bei Raumtemperatur getrocknet (23 °C, rel. Luftfeuchtigkeit 65 %)

Tabelle 4

| Lackbezeichnung | | 1 | 2 | 3 | 4 | 5 (Vergleich) |
|---|---|---|---|---|---|---|
| Aussehen der Lackfilme | | transparent | transparent | transparent | transparent | transparent |
| Potlife* | in h | 6 | 7 | 6 | 6 | 3 |
| Klebfreizeit** | in h | 3,5 | 4 | 4 | 4 | 4 |
| Festkörper-Massenanteil ‡ | in % | 65 | 63 | 63 | 62 | 65 |

*Topfzeit = Potlife: Zeit in Stunden bis zur Verdoppelung der Ausgangsviskosität des Lackes
**Klebfreizeit: Zeit in Stunden, bis der Lackfilm nicht mehr klebt (Daumenprüfung)
‡Festkörper-Massenanteil: praktisch (gemäß DIN EN ISO 3251) ermittelter Festkörper-Massenanteil (Anteil an nichtflüchtigen Verbindungen) im Lack

Ergebnis: Die erreichten Festkörper-Massenanteile im Klarlack sind alle größer als 60 %. Alle Produkte trocknen rasch an. Das Potlife des Vergleichsbeispiels ist nur halb so lang wie das der Lacke basierend auf den erfindungsgemäßen Produkten.

**4) UV-Vergilbung**

Prüfling: 300 $\mu$m Naßfilmaufzug auf weißen Kacheln, 7 Tage bei Raumtemperatur getrocknet.
Durch eine UV-Bestrahlungs-Anlage (Geschwindigkeit 4 m/min, Lampenleistung 2 x 80 W/cm) wurden die 5 Kacheln mit den Lacken enthaltend die erfindungsgemäßen Bindemittel inkl. die Vergleichskachel 10, 20 und 30 mal geschickt.
Ergebnis: Eine Vergilbung war bei den Lacken enthaltend die erfindungsgemäßen niedermolekularen Polyester-Polyole und bei dem Vergleich nicht feststellbar.

5) **Härteentwicklung:**

Die unter 2) gefertigten Lacksysteme wurden mittels 200 $\mu$m Rakel auf gereinigte Glasplatten appliziert und nach 10 Minuten Flash-off 30 Minuten bei 80 °C forciert getrocknet.

Tabelle 5

| Lackbezeichnung | 1 | 2 | 3 | 4 | 5 (Vergleich) |
|---|---|---|---|---|---|
| Trockenfilmdicke (ISO 2808) in $\mu$m | 52 | 50 | 50 | 50 | 52 |
| Pendelhärte nach König (DIN 53157) nach 1 h bei RT in s nach 1 d bei RT in s | 153 167 | 147 183 | 140 165 | 139 167 | 135 147 |

Die Klarlacke aus den Bindemitteln 1b2) und 1c) ergaben Pendelhärten von 170 s (Trocknung wie oben 30 Minuten bei 80 °C, Messung nach einem Tag Lagerung bei Raumtemperatur).
Ergebnis: Die erreichten Pendelhärten mit den erfindungsgemäßen Polyestern, mit Mischungen der Polyester mit niedermolekularen Acrylatcopolymerisaten gemäß 1c) und ebenso mit dem gemäß 1b2) hergestellten Schoßpolymerisat liegen hervorragend hoch. Es sind keine Einbußen aufgrund der extrem niedermolekularen Bindemittel zu erkennen.

**6) Verlaufsprüfung:**

Mit der sogenannten Wave-Scan-Methode kann die Oberflächenstruktur ("orange peel") einer Beschichtung objektiv beurteilt werden. Dabei wird über eine Meßstrecke von 10 cm die Reflexion eines Laserstrahls (Einstrahlwinkel = Beobachtungswinkel = 60 °) gemessen. Angegeben wird die "Langwelligkeit" ("long wave"), die sich aus der normierten Varianz $a$ (des durch eine Fourier-Analyse ermittelten langwelligen Anteils von charakteristischen Längen zwischen 0,6 und 10 mm) der reflektierten Lichtintensität $I_s$ längs der Meßstrecke von s = 0 cm bis s = 10 cm errechnet nach

$$a = \frac{1000}{s \times I^2} \times \int (I_s - I)^2 ds$$

wobei $I$ die mittlere reflektierte Lichtintensität in der Meßstrecke ist.

Die sogenannte Langwelligkeit ist dann definiert als

$$L = 67 \cdot \lg (1 + a / 20)$$

wobei für die "korrigierte Langwelligkeit" $L_k$ offensichtliche Ausreißer in der Reflexions-Intensität eliminiert werden. Je größer der gemessene Wert für die (korrigierte) Langwelligkeit $L_k$ ist, desto stärker zeigt die betreffende Probe die Oberflächenbeschaffenheit, die "orange peel" genannt wird.

Tabelle 6

| Lackbezeichnung | | 1 | 2 | 3 | 4 | 5 (Vergleich) |
|---|---|---|---|---|---|---|
| Schichtstärke | in $\mu$m | 30 | 30 | 30 | 30 | 30 |
| $L_k$ | | 6 | 6 | 7 | 8 | 14 |

Ergebnis: Der visuelle Eindruck von der besseren Oberfläche der mit den erfindungsgemäßen Bindemitteln hergestellten Lackfilmen wird durch die Quantifizierung mit der Wave scan Methode bestätigt: während die Lackfilme aus den Lacken 1 bis 4 keine oder nur geringe Oberflächenunregelmäßigkeiten aufweisen, ist beim Lackfilm aus dem Vergleichslack 5 einen deutliche Orangenhaut-Struktur ("orange peel effect") wahrzunehmen.

In gleicher Weise wurden die Oberflächenunregelmäßigkeiten mit den aus 1c) und 1b2) hergestellten Klarlacken verglichen. Mit einem Klarlack aus der Mischung 1c) ergaben sich Werte für $L_k$ von 23 bis 24, während der Klarlack aus dem Schoßpolymerisat 1b2) einen Wert für $L_k$ von nur 7 ergab.

## 7) Synthese der "sag-controlled"-Polyesterpolyole

In einen 21-Dreihalskolben wurden 1206 g des erfindungsgemäßen Polyesters aus Beispiel 2 gefüllt. Unter Rühren wurden 18,0 g Isotridecylalkohol und 6,1 g m-Xylylendiamin zugegeben. Danach wurden 15,1 g Hexamethylendiisocyanat gelöst in 98 g Solventnaphtha 150/180 (® Solvesso 100, Fa. Exxon bzw. ® Shellsol 100, Fa. Shell Chemie) unter Beobachtung der Reaktionstemperatur (exotherm) - max. 35 °C zugegeben und verrührt (innerhalb von ca. 4 Stunden). Nach 4 Stunden wurde die Reaktionstemperatur auf 50 °C erhöht und 3 Stunden gehalten. Hiernach wurde der Massenanteil an Isocyanatgruppen ("NCO-Wert") in Anlehnung an DIN EN ISO 11909 gemessen, es ergab sich ein Wert von unter 0,1%.

Der so hergestellte "sag-controlled"-Polyester (SCA-PE) wird auf 65 % Festkörper-Massenanteil (gemessen nach DIN EN ISO 3251) durch Zugabe von Butylacetat eingestellt.

Eigenschaften:

| | "SCA-PE" |
|---|---|
| Feststoff-Massenanteil in %, nach DIN EN ISO 3251 | 65,3 % |
| Aussehen | leichte Trübung (transluzent) |
| Körnigkeit (Grindometer) | keine |
| Rheologie: Scherrate (1 bis 200 und zurück bis 1 s$^{-1}$) | thixotrop |

(Grindometer: Meßgerät zur Bestimmung der "Mahlfeinheit" gemäß ISO 1524)

## 8) Herstellung von "ultra high solids" Klarlacken mit hoher Ablaufgrenze

Mit den in Tabelle 7 angegebenen Einwaagen der genannten Komponenten wurden Klarlacke aus dem "sag-controlled-Polyesterpolyol" ("SCA-PE") hergestellt und anschließend sämtlich auf Verarbeitungsviskosität entsprechend einer Auslaufzeit von 21 s eingestellt (gemessen nach DIN 53211, bei 23 °C).

Tabelle 7: Zusammensetzung des Prüflacks "6 sca"

| Komponente | |
|---|---|
| "sag-controlled" - Polyester von Beispiel 7 | 216 g |
| ®Tinuvin 292 (Ciba Spezialchemikalien) | 1,2 g |
| ®Tinuvin 1230 (Ciba Spezialchemikalien) | 3,5 g |
| ®Tego Glide 450 (Tego Chemie) | 0,1 g |
| ®Metatin (Acima, Buchs) | 2.38g |
| Methylamylketon/Butylglykolacetat/Methoxypropylacetat (Mischung im Massenverhältnis 60:15:25) | 35,2 g |
| Summe | 258,38 g |
| ®Desmodur N 3300 (Bayer AG, Leverkusen) | 106,5 g |
| Spritzverdünnung (Methylamylketon/Butylglykolacetat Mischung im Massenverhältnis 60:40) | 75 g |
| Festkörper-Massenanteil im Lack (DIN EN ISO 3251; Trocknung bei 125 °C, 1 h; 2 g Probe + 2 ml Äthylacetat) | 60,0% |
| Applikationsviskosität (Auslaufzeit DIN EN ISO 2431; 23 °C, Becher Nr. 4) | 21 s |
| Vernetzungsgrad | 100 % |

9) **Prüfung der Klarlacke mit und ohne "sag controlled''-Modifikation:**

Die Lacke 2 (ohne Modifikation) und 6 sca wurden auf Lochbleche ($20 \times 30$ cm$^2$), in deren Diagonale 15 kreisförmige Löcher mit einem Durchmesser von 0,5 cm angeordnet waren, mit zunehmender Trockenfilm-Schichtstärke ("Trockenfilmkeil") von 20 bis 70 $\mu$m gespritzt. Nach 15 Minuten Ablüften und anschließendem Trocknen während 30 Minuten bei 80 °C wurde die Ablaufgrenze ermittelt (Beginn der Bildung von Tropfnasen an den Löchern). Zur Beurteilung der Oberflächenqualität wurden die Wave-Scan-Methode (s. o.) und die Messung des Glanzes herangezogen.

Tabelle 8: Prüfergebnisse

| Lack | 6 sca | 2 (Vergleich) |
|---|---|---|
| Ablaufgrenze in $\mu$m | 60 | 42 |
| Wave Scan: $L_k$ bei 33 $\mu$m Schichtdicke des Trockenfilms | 8 | 6 |
| Glanz (Trigloss; 20 °, gemessen bei 33 $\mu$m Schichtdicke des Trockenfilms) | 88 | 90 |

Ergebnis: Mit dem erfindungsgemäßen Lack 6sca, der zusätzlich die "sag-controlled"-Modifikation aufweist, lassen sich Dickschichtklarlacke bis zu ca. 60 $\mu$m (im Vergleich zu ca. 40 $\mu$m ohne die genannte Modifikation) applizieren. Der Klarlack 6sca ergibt Lackfilme mit hoher Oberflächengüte (ohne "orange peel") und hervorragendem Glanz.

**Patentansprüche**

1. Polyesterpolyole mit einer gewichtsmittleren molaren Masse $M_w$ von bis zu 3500 g/mol, mit Hydroxylzahlen von 80 bis 280 mg/g und Säurezahlen von 5 bis 40 mg/g, enthaltend die genannten Stoffmengenanteile (in % = mol/100 mol) von Strukturbausteinen abgeleitet von

a) 1 bis 18 % aliphatischen mono- oder polycyclischen Verbindungen **A**, die elektronenreiche heterocyclische mindestens bifunktionelle Verbindungen sind mit mindestens einer cyclischen Struktur, die neben Kohlenstoff, Wasserstoff und Sauerstoff mindestens ein Heteroatom ausgewählt aus Stickstoff, Schwefel und Phosphor enthalten, und deren funktionelle Gruppen ausgewählt sind aus Hydroxylgruppen und Epoxidgruppen,
b) 1 bis 30 % aliphatischen acyclischen oder cyclischen Polyhydroxyverbindungen **B** mit drei oder mehr Hydroxylgruppen pro Molekül,

12

c) 15 bis 50 % linearen oder verzweigten aliphatischen Dihydroxyverbindungen **C**,

d) 25 bis 60 % aliphatischen cyclischen Polycarbonsäuren D

wobei der Quotient der Summe der Stoffmengen an Hydroxyl- und Epoxid-Gruppen der Komponenten **A** und **B** und der Stoffmenge an Hydroxylgruppen der Komponente **C** mindestens 1 oder größer als 1 ist, und sich die unter a), b), c) und d) jeweils angegebenen Stoffmengenanteile zu 100% ergänzen.

2. Polyesterpolyole nach Anspruch 1, **dadurch gekennzeichnet, daß** zusätzlich Stoffmengenanteile bis zu 20 % von Strukturbausteinen abgeleitet von polyfunktionellen Verbindungen **E,** ausgewählt aus aliphatischen linearen und verzweigten Dicarbonsäuren, aromatischen Dicarbonsäuren und Polycarbonsäuren mit drei oder mehr Carboxylgruppen pro Molekül, enthalten sind.

3. Polyesterpolyole nach Anspruch 1, **dadurch gekennzeichnet, daß** zusätzlich Stoffmengenanteile bis zu 15 % von Strukturbausteinen abgeleitet von monofunktionellen Bausteinen **F** ausgewählt aus Monocarbonsäuren, Monoepoxiden und Monoalkoholen enthalten sind.

4. Polyesterpolyole nach Anspruch 1, **dadurch gekennzeichnet, daß** das Heteroatom Stickstoff ist.

5. Polyesterpolyole nach Anspruch 4, **dadurch gekennzeichnet, daß** eine Carbonylgruppe in alpha-Stellung zu dem Stickstoffatom steht.

6. Polyesterpolyole nach Anspruch 1, **dadurch gekennzeichnet, daß** als Polyhydroxyverbindung **A** Trishydroxyäthylisocyanurat eingesetzt wird.

7. Mischungen von Acrylatcopolymerisaten und Polyesterpolyolen nach Anspruch 1, **dadurch gekennzeichnet, daß** ein Acrylatcopolymerisat in Gegenwart des Polyesterpolyols hergestellt oder nach seiner Synthese dem Polyesterpolyol zugemischt wird, wobei das dem Copolymerisat zugrundeliegende Monomerengemisch

- mindestens ein olefinisch ungesättigtes Monomeres **G** enthält, das ein Alkyl-Ester einer aliphatischen linearen, verzweigten oder cyclischen α,β-ungesättigten Monocarbonsäure oder ein Alkyl-Diester einer olefinisch ungesättigten aliphatischen linearen, verzweigten oder cyclischen Dicarbonsäure mit 1 bis 20 Kohlenstoffatomen im linearen, verzweigten oder cyclischen Alkylrest und 3 bis 10 Kohlenstoffatomen im Säurerest des Esters ist,
- weiterhin mindestens einen Hydroxyalkylester **H** einer der unter **G** genannten Mono-oder Dicarbonsäuren, wobei der Hydroxyalkylrest abgeleitet ist von einem mindestens zweiwertigen aliphatischen linearen, verzweigten oder cyclischen Alkohol mit 2 bis 15 Kohlenstoffatomen, und
- mindestens eine Carbonsäure **I** ausgewählt aus den unter **G** genannten Monocarbonsäuren und Dicarbonsäuren in unveresterter bzw. bei den Dicarbonsäuren in mit einem der unter **G** genannten Alkylreste oder der einem unter **H** genannten Hydroxyalkylreste halbveresterter Form.

8. Mischungen nach Anspruch 7, **dadurch gekennzeichnet, daß** das Acrylatcopolymerisat durch Polymerisation der Komponenten **G** bis **I** in Gegenwart einer cyclischen Verbindung **K** erhältlich ist, wobei diese Verbindung **K** mit den als Komponente **I** und/oder mit den als Komponente **H** eingesetzten Verbindungen unter Bildung einer copolymerisationsfähigen Verbindung reagieren kann.

9. Lacke, enthaltend niedermolekulare Polyesterpolyole nach Anspruch 1 als Bindemittel.

10. Lacke, enthaltend Mischungen nach Anspruch 7 oder 8 als Bindemittel.

11. Lacke nach Anspruch 9, **dadurch gekennzeichnet, daß** sie zusätzlich zu dem Bindemittel Reaktionsprodukte von Mono- oder Polyaminen und ein- oder mehrfunktionellen Isocyanaten enthalten.

12. Lacke nach Anspruch 11, **dadurch gekennzeichnet, daß** die Umsetzung von Mono-oder Polyaminen mit ein- oder mehrfunktionellen Isocyanaten in Gegenwart der Polyesterpolyole gemäß Anspruch 1 erfolgt.

13. Lacke nach Anspruch 10, **dadurch gekennzeichnet, daß** sie zusätzlich zu dem Bindemittel Reaktionsprodukte von Mono- oder Polyaminen und ein- oder mehrfunktionellen Isocyanaten enthalten.

14. Lacke nach Anspruch 13, **dadurch gekennzeichnet, daß** die Umsetzung von Mono-oder Polyaminen mit ein- oder mehrfunktionellen Isocyanaten in Gegenwart der Mischungen von Polyesterpolyolen und Acrylatcopolymerisaten gemäß Anspruch 5 oder 6 erfolgt.

15. Verwendung von Lacken nach einem der Ansprüche 9 bis 14 zur Herstellung von Beschichtungen.

**Claims**

1. A polyester polyol having a weight-average molar mass $M_w$ of up to 3500 g/mol, having a hydroxyl number of from 80 to 280 mg/g and an acid number of from 5 to 40 mg/g, comprising the stated amounts of substance fractions (in % = mol/100 mol) of structural units derived from

   a) from 1 to 18 % of aliphatic monocyclic or polycyclic compounds **A** which are electronrich heterocyclic, at least bifunctional compounds which possess at least one cyclic structure and contain, in addition to carbon, hydrogen and oxygen, at least one heteroatom selected from nitrogen, sulfur and phosphorus, and whose functional groups are selected from hydroxyl groups and epoxide groups,
   b) from 1 to 30 % of aliphatic acyclic or cyclic polyhydroxy compounds **B** containing three or more hydroxyl groups per molecule,
   c) from 15 to 50 % of linear or branched aliphatic dihydroxy compounds **C**,
   d) from 25 to 60 % of aliphatic cyclic polycarboxylic acids **D**,

   the ratio of the sum of the amounts of substance of hydroxyl groups and epoxide groups of the components **A** and **B** to the amount of substance of hydroxyl groups of the component **C** being at least 1 or greater than 1, and the amounts of substance fractions indicated in each case under a), b), c) and d) adding up to 100 %.

2. The polyester polyol as claimed in claim 1, further comprising amounts of substance fractions of up to 20 % of structural units derived from polyfunctional compounds **E** selected from aliphatic linear and branched dicarboxylic acids, aromatic dicarboxylic acids, and polycarboxylic acids containing three or more carboxyl groups per molecule.

3. The polyester polyol as claimed in claim 1, further comprising amount of substance fractions of up to 15% of structural units derived from monofunctional units **F** selected from monocarboxylic acids, monoepoxides and monoalcohols.

4. The polyester polyol as claimed in claim 1, wherein the heteroatom is nitrogen.

5. The polyester polyol as claimed in claim 4, wherein a carbonyl group is positioned alpha to the nitrogen atom.

6. The polyester polyol as claimed in claim 1, wherein trishydroxyethyl isocyanurate is used as polyhydroxy compound **A.**

7. A mixture of acrylate copolymers and polyester polyols as claimed in claim 1, wherein an acrylate copolymer is prepared in the presence of the polyester polyol or is added to the polyester polyol following its synthesis, the monomer mixture on which the copolymer is based comprising

   - at least one olefinically unsaturated monomer **G** which is an alkyl ester of an aliphatic linear, branched or cyclic $\alpha,\beta$-unsaturated monocarboxylic acid or an alkyl diester of an olefinically unsaturated aliphatic linear, branched or cyclic dicarboxylic acid having from 1 to 20 carbon atoms in the linear, branched or cyclic alkyl radical and from 3 to 10 carbon atoms in the acid radical of the ester,
   - also at least one hydroxyalkyl ester **H** of one of the monocarboxylic or dicarboxylic acids mentioned under **G**, the hydroxyalkyl radical being derived from an at least dihydric aliphatic linear, branched or cyclic alcohol having from 2 to 15 carbon atoms, and
   - at least one carboxylic acid **I** selected from the monocarboxylic acids and dicarboxylic acids mentioned under **G**, in unesterified form or, in the case of the dicarboxylic acids, in a form in which it is monoesterified with one of the alkyl radicals mentioned under **G** or one of the hydroxyalkyl radicals mentioned under **H.**

8. A mixture as claimed in claim 7, wherein the acrylate copolymer is obtainable by polymerizing the components **G** to **I** in the presence of a cyclic compound **K**, it being possible for this compound **K** to react with the compounds used as component **I** and/or as component **H** to form a copolymerizable compound.

9. A coating material comprising a low molar mass polyester polyol as claimed in claim 1 as binder.

10. A coating material comprising a mixture as claimed in claim 7 or 8 as binder.

11. A coating material as claimed in claim 9, comprising further to the binder reaction products of monoamines or polyamines and monofunctional or polyfunctional isocyanates.

12. The coating material as claimed in claim 11, wherefor the reaction of monoamines or polyamines with monofunctional or polyfunctional isocyanates takes place in the presence of a polyester polyol as claimed in claim 1.

13. A coating material as claimed in claim 10, comprising further to the binder reaction products of monoamines or polyamines and monofunctional or polyfunctional isocyanates.

14. The coating material as claimed in claim 13, wherefor the reaction of monoamines or polyamines with monofunctional or polyfunctional isocyanates takes place in the presence of the mixture of polyester polyols and acrylate copolymers as claimed in claim 5 or 6.

15. The use of a coating material as claimed in any of claims 9 to 14 to produce coatings.

**Revendications**

1. Polyesterpolyols ayant une masse molaire moyenne en poids $M_w$ allant jusqu'à 3500 g/mol, ayant des indices d'hydroxyle de 80 à 280 mg/g et des indices d'acide de 5 à 40 mg/g, contenant les fractions molaires suivantes (en % = mol/100 mol) en éléments constitutifs structuraux, dérivés de :

   a) 1 à 18 % de composés aliphatiques mono- ou polycycliques A, qui sont des composés hétérocycliques riches en électrons au moins bifonctionnels ayant au moins une structure cyclique, qui contiennent, outre du carbone, de l'hydrogène et de l'oxygène, au moins un hétéroatome choisi parmi l'azote, le soufre et le phosphore, et dont les groupes fonctionnels sont choisis parmi les groupes hydroxyles et les groupes époxy,
   b) 1 à 30 % de composés polyhydroxylés aliphatiques acycliques ou cycliques B ayant au moins trois groupes hydroxyles par molécule,
   c) 15 à 50 % de composés dihydroxylés aliphatiques linéaires ou ramifiés C,
   d) 25 à 60 % d'acides polycarboxyliques aliphatiques cycliques D où le quotient de la somme des quantités molaires de groupes hydroxyles et époxydes des composants A et B et des quantités molaires de groupes hydroxyles du composant C est au moins égal à 1 ou est supérieur à 1, et où les fractions molaires données chacune sous a), b), c) et d) se complètent à 100 %.

2. Polyesterpolyols selon la revendication 1, **caractérisés en ce qu'**ils comprennent en outre des fractions molaires allant jusqu'à 20 % d'éléments constitutifs dérivés de composés polyfonctionnels E, choisis parmi des acides dicarboxyliques aliphatiques linéaires et ramifiés, des acides dicarboxyliques aromatiques et des acides polycarboxyliques ayant au moins trois groupes carboxyliques par molécule.

3. Polyesterpolyols selon la revendication 1, **caractérisés en ce qu'**ils comprennent en outre des fractions molaires allant jusqu'à 15 % d'éléments constitutifs structuraux dérivés d'éléments constitutifs monofonctionnels F choisis parmi des acides monocarboxyliques, des mono-époxydes et des mono-alcools.

4. Polyesterpolyols selon la revendication 1, **caractérisés en ce que** l'hétéroatome est l'azote.

5. Polyesterpolyols selon la revendication 4, **caractérisés en ce qu'**un groupe carbonyle se trouve en position alpha de l'atome d'azote.

6. Polyesterpolyols selon la revendication 1, **caractérisés en ce qu'**on utilise de l'isocyanurate de tris-hydroxyéthyle comme composé polyhydroxyle A.

7. Mélanges de copolymérisats d'acrylate et de polyesterpolyols selon la revendication 1, **caractérisés en ce qu'**un copolymérisat d'acrylate est produit en présence du polyesterpolyol ou bien est ajouté au polyesterpolyol après sa synthèse, où le mélange de monomères qui est à la base du copolymérisat :

   - contient au moins un monomère oléfinique insaturé G, qui est un alkyle-ester d'un acide monocarboxylique α,β-insaturé aliphatique linéaire, ramifié ou cyclique ou un alkyle-diester d'un acide dicarboxylique oléfinique insaturé aliphatique linéaire, ramifié ou cyclique ayant 1 à 20 atomes de carbone dans le radical alkyle linéaire, ramifié ou cyclique et 3 à 10 atomes de carbone dans le radical acide de l'ester,

- en outre au moins un ester d'hydroxyalkyle H d'un des acides mono- ou dicarboxylique précités dans G, le radical hydroxyle étant dérivé d'un alcool au moins bivalent aliphatique linéaire, ramifié ou cyclique ayant 2 à 15 atomes de carbone, et

- au moins un acide carboxylique I choisi parmi les acides monocarboxyliques et les acides dicarboxyliques précités dans G sous forme non estérifiée ou pour les acides dicarboxyliques sous forme semiestérifiée avec un radical alkyle précité dans G ou un radical hydroxyalkyle précités dans H.

8. Mélanges selon la revendication 7, **caractérisés en ce que** le copolymérisat d'acrylate est susceptible d'être obtenu par polymérisation des composants G à I en présence d'un composé cyclique K, ce composé K pouvant réagir avec les composés utilisés comme composés I et/ou avec les composés utilisés comme composés H avec formation d'un composé pouvant former un copolymère.

9. Vernis contenant des polyesterpolyols à faible masse moléculaire selon la revendication 1 à titre de liant.

10. Vernis contenant des mélanges selon la revendication 7 ou 8 à titre de liant.

11. Vernis selon la revendication 9, **caractérisés en ce qu'**ils contiennent, en plus du liant, des produits réactionnels de mono- ou polyamines et des isocyanates mono- ou polyfonctionnels.

12. Vernis selon la revendication 11, **caractérisés en ce que** la transformation de mono- ou polyamines avec des isocyanates mono-ou polyfonctionnels se produit en présence des polyesterpolyols selon la revendication 1.

13. Vernis selon la revendication 10, **caractérisés en ce qu'**ils contiennent en plus du liant, des produits réactionnels de mono- ou polyamines et des isocyanates mono- ou polyfonctionnels

14. Vernis selon la revendication 13, **caractérisés en ce que** la transformation de mono- ou polyamines avec des isocyanates mono-ou polyfonctionnels se produit en présence des mélanges de polyesterpolyols et de copolymérisats d'acrylate selon la revendication 5 ou 6.

15. Utilisation des vernis selon l'une des revendications 9 à 14 pour la fabrication de revêtements.